# EUROPEAN PATENT APPLICATION

(11) **EP 4 674 820 A1**
(43) Date of publication of application: **07.01.2026**
(21) Application number: 24186279.6
(22) Date of filing: 03.07.2024
(51) Int. Cl.: C02F 9/00, C02F 1/28, C02F 1/40, C02F 1/42, C02F 103/34, C02F 103/44

(54) **WASHING WATER FILTRATION APPARATUS AND METHOD FOR FILTERING WASHING WATER**

(71) Applicant: Thoressons Industri & Kompressor-service, 57495 Björköby (SE)
(72) Inventor: THORESSON, Egon, 57495 Björköby (SE)
(74) Representative: AWA Sweden AB

(57) **Abstract**

The present invention relates to n apparatus (100) and method (1100) for filtering washing water. The apparatus (100) comprises a first container, (110), a second container (120), a third container (130), a fourth container (140), and a filter unit. The first through fourth container each comprising at least one inlet (113, 123, 133, 143), and at least one outlet (117, 127, 137, 147). The filter unit (160) comprising activated charcoal and/or deionizing material. The at least one outlet of the first container comprises an outlet arranged to deposit washing water through at least one inlet of the second container. The second container comprises a first overflow passage (210) arranged from the at least one outlet of the second container to the at least one inlet of the third container. The third container comprises a second overflow passage (220) arranged from the at least one outlet of the third container to the at least one inlet of the fourth container. The fourth container comprises any one or more of, a third overflow passage (230) arranged from the at least one outlet of the fourth container and an outlet (147b) of the at least one outlet (147) configured to deposit washing water into the filter unit. Each overflow passage arranged in an upper portion of its respective container and fluidly connecting the preceding container and following container. At least one of the first, second, and/or third overflow passage extends into a conduit element (310), the conduit element leading from a respective container's inlet and extending towards the bottom of the respective container.

## Description

### FIELD OF THE INVENTION

The present invention generally relates to a water filtration apparatus and method thereof. More specifically, the present invention is related to a washing water filtration apparatus comprising a first container, a second container, a third container, a fourth container and a filter unit.

### BACKGROUND OF THE INVENTION

Filtering of water has been a continuous problem, as there is a continued increase in production more and more pollutants and contaminants are added to water and are therefore continually needed to be adequately removed therefrom to both preserve and maintain usable water. In particular, there is a desire for cheaper and more efficient filtering of water as the overall usage increases and therefore the amount of pollutants increase. In the field of washing water there are multiple regulatory requirements on what needs to be done with water polluted with pollutants and contaminants. There are sedimentations processes that satisfy the regulatory guidelines, but take several weeks to fulfill the filtering process criteria. There are various issues and problems with known washing water filtering apparatuses. They are generally large, occupying large amounts of space. Some washing water filtering apparatuses take a long time before the filtered water obtained is suitable for use, i.e., enough contaminants are removed to fulfil useability criteria.

In many situations, the only way for an industry to take care of the water in an efficient way is to send it away for destruction. However, such procedure is not cost-efficient or environmentally friendly.

Consequently, there is a need for an improved washing water filtering apparatus and method thereof, that in an efficient manner filters industrial water. It is an object of the present invention to resolve, or alleviate at least one of the aforementioned problems.

### SUMMARY OF THE INVENTION

It is of interest to overcome at least some of the deficiencies related to water filtration, and in particular for achieving an improved efficiency in cost and time of filtering washing water whilst providing a non-complex and/or conveniently operated washing water filtering apparatus.

This and other objects are achieved by providing an apparatus for filtering washing water having the features in the independent claim. Preferred embodiments are defined in the dependent claims.

According to a first aspect of the present invention, there is provided an apparatus for filtering washing water. The apparatus comprising at least a first container, a second container, a third container, a fourth container and a filter unit. The first container configured to hold a first pre-determined volume of water, and the first container comprising at least one inlet and at least one outlet, and arranged to receive used washing water through the at least one inlet. The second container configured to hold a second pre-determined volume of water, comprising at least one inlet and at least one outlet. The third container configured to hold a third pre-determined volume of water, comprising at least one inlet and at least one outlet. The fourth container configured to hold a fourth pre-determined volume of water, comprising at least one inlet and at least one outlet. The filter unit comprising at least one inlet. The at least one outlet of the first container comprises an outlet arranged to deposit water through at least one inlet of the at least one inlet of the second container into the second container. The second container comprising a first overflow passage arranged from at least one outlet of the at least one outlet of the second container to at least one inlet of the at least one inlet of the third container, thereby fluidly coupling the second container and the third container. The first overflow passage arranged in an upper portion of the second container. The third container comprising a second overflow passage arranged from at least one outlet of the at least one outlet of the third container to at least one inlet of the at least one inlet of the fourth container, thereby fluidly coupling the third container and the fourth container. The second overflow passage arranged in an upper portion of the third container. The fourth container comprising any one or more of a third overflow passage arranged from at least one of the at least one outlet of the fourth container, wherein the third overflow passage is arranged in an upper portion of the fourth container, and/or an outlet of the at least one outlet of the fourth container, the outlet configured to deposit water into at least one inlet of the at least one inlet of the filter unit. The filter unit comprising at least one of activated charcoal and/or deionizing material. At least one of the first, second and/or third overflow passage extends into a conduit element leading from a respective container's inlet and extending towards the bottom of the respective container.

According to a second aspect of the present invention there is provided a method for filtering washing water. The method may be performed by an apparatus according to the first aspect. The method comprises receiving washing water through a first inlet of a first container, settling washing water in the first container for at least a first pre-determined period of time, transporting the washing water from an outlet of the first container to an inlet of a second container at a first flow rate, settling the washing water in the second container for at least a second pre-determined period of time, transporting the washing water from an outlet of the second container to an inlet of a third container using a first overflow passage arranged in an upper portion of the second container, transporting the washing water from an outlet of the third container to an inlet of a fourth container using a second overflow passage arranged in an upper portion of the third container, transporting the washing water from the fourth container though an outlet of the fourth container, transporting the washing water into an inlet of a filter unit comprising at least one of activated charcoal and/or deionizing material, and filtering the washing water in the filter unit utilizing the activated charcoal and/or the deionizing material. The transporting of the washing water from the outlet of the second container to the third container comprises transporting the top layer of washing water in the second container through the first overflow passage. The transporting of the washing water from the outlet of the third container to the fourth container comprises transporting the top layer of washing water in the third container through the second overflow passage.

Thus, the present invention is based on the concept that filtering of washing water occurs through sedimentation and/or flocculation of pollutants in multiple containers, with the top layer of water being transported to the at least two containers through overflow passages, and that heavy metals and pollutants are managed by either activated charcoal and/or a deionizing material to enable an improved washing water filtering apparatus and method. In particular, an optimization in resource and speed for filtering washing water may be achieved by the apparatus for filtering washing water according to the present invention. Due to the multistage sedimentation filtration process there may be an improved quality of filtered water within a reduced amount of time and with a reduced or improved use of resources spent on filtering washing water. An improved time for providing a pre-determined quality of filter water may thereby be provided. The nature of the apparatus may provide that the inflow of washing water into a next container through an overflow passages enables the cleaner washing water to proceed to a next container. The washing water may be flowed through the processes at the rate determined by a pre-determined time and the flow rate of the water into the second container. The apparatus may further be advantageous in that the use of multiple containers enables the apparatus to be stored in a space efficient manner during use. The combination of the containers and the filter unit as provided in the present invention enables the washing water to be effectively filtered, such that the water output from the filter unit may fulfil the requirements to be discharged into a drain.

Thus, there is provided an apparatus for filtering washing water. By the term "washing water" it is here meant that the water has been used for washing or cleaning in an industrial environment, and it contains pollutants and contaminants obtained while washing an area e.g., a workshop, a car, a facility or industry floor. The invention may be used for any type of industrially used water. Herein "configured to deposit water into the filter unit" may mean that there is e.g., a conduit from and outlet to the inlet of the filter unit. Alternatively, there may be additional optional steps performed in between the outlet and the deposition of water into the filter unit, e.g., a heat or freeze treatment of the water. Herein, the "top layer" of water may be the water at the top of a pre-determined container that is transported across an overflow passage by a rate of inflow and the size of the overflow passage.

The containers may be arranged as separate containers in fluid connection with each other through the inlets and outlets. In some embodiments, two or more of the containers may be formed as compartments of a common container, divided into compartments by divider walls. The overflow passages may thereby be formed by said divider walls. For instance, at least the second, third and fourth containers may be formed by divider walls in a common container.

The first, second, third and fourth pre-determined volumes of water may be the same pre-determined volume of water. The pre-determined volume of water may correspond to a batch size of water intended to be filtered. When a first batch is received by the apparatus, the whole volume may then be received in the first container. A time may pass until a second batch may be received, allowing a filtering process to be performed in the first container, e.g. by contaminants and pollutants to sink to the bottom of the first container. When the second batch is received, the first batch may move to the second container, and the second batch be received in the first container. Correspondingly, when a third batch is received, the first batch may flow to the third container, and subsequently to the fourth container when a fourth batch is received. When a fifth batch is received, the first batch may be filtered in the filter unit. Consequently, between the receptions of each consecutive batch, a batch of water may stay in a container and pollutants and contaminants may be separated from the water. When a new batch is received, the water of a previous batch may flow through an overflow passage at an upper portion of the container to the next container. Contaminants and pollutants may then have moved towards the bottom of the container and not following the water to the next container. Preferably, the batches of water may be received with a minimum time duration in between, such as half an hour, one hour, two hours, three hours or four hours.

The filter unit may comprise an outlet for discharging the filtered water from the apparatus.

In an embodiment the fourth container may comprise at least a fifth container. The fifth container may comprise at least one inlet and at least one outlet, wherein the third overflow passage may be arranged from at least one outlet of the at least one outlet of the fourth container to the at least one inlet of the fifth container. The fifth container may further comprise any one or more of the following, a fourth overflow passage arranged from at least one outlet of the fifth container, the fourth overflow passage arranged in an upper portion of the fifth container, and an outlet of the at least one outlet configured to deposit water into the filter unit. It will be appreciated that, the apparatus for filtering washing water may further comprise more container than the first through fourth containers, for example the fifth container, or even a fifth and a sixth container. It will further be appreciated that more containers may enable an improved filtering of the washing water.

By the term "overflow passage" it may hereby be meant a conduit configured to transfer water away from the container, for example it may be a structure, e.g., a shortened wall of the container, in which once a pre-determined volume has been reached any more water entering into the container may cause the top layer of washing water to be transported across the overflow passage. Alternatively a channel, or a tube such as a pipe or hose, may be configured in the same manner, such that when a pre-determined volume has been achieved in the container, any new water entering into the container may cause an overflow of the top layer into the channel or tube into the next container. This may be advantageous as this enable the least dense material, to be passed on through enabling a filtration of denser pollutants out of water to achieve a higher quality of filtered water, i.e., enabling the retrieval of water with a lower level of pollutants and contaminants.

In one embodiment, at least one outlet configured to deposit water into the filter unit may be arranged in the upper portion of the respective container. This may be advantageous as this enables more pollutants and contaminants to remain in the container prior to the filter unit, thereby enabling the retrieval of filtered water with a lower number of pollutants and contaminants.

According to an embodiment of the present invention, for at least one of the second through forth container an axis may extend through said container, and the at least one inlet of a respective container may be arranged on a first side of said axis, and the at least one outlet of the respective container may be arranged on an opposite side of said axis in the container. It will be appreciated that the further away from each other the inlet and the outlet are, the lower the risk may be of new pollutants entering into the chamber being transported directly with the inflow of water into the outlet, thereby providing the advantage of providing an improved quality of filtering in the water transported out the outlet of the container. It will further be appreciated that all, or at least the second through fourth (or fifth if present), containers may be arranged in this manner i.e., all inlets are arranged diagonally across from a respective outlet for the respective container. The axis may be a longitudinal axis of the apparatus.

According to an embodiment each overflow passage may extend into a respective conduit element, the respective conduit element leading from a respective container's inlet and extending towards the bottom of the respective container. In other words, each overflow passage may be fluidly connected to a conduit element that is fluidly connected to the next container in the series of containers for the apparatus. This may be advantageous as the conduit leading the overflow water to the bottom of the next container may enable the top layer of the washing water in the next container to not be mixed with the incoming overflow water, thereby enabling a cleaner, less polluted top layer to be transferred to the even next container for a more efficient filtering process. The conduit may be formed as a channel, a tube, a hose, a pipe or the like.

According to an embodiment, the first through fourth pre-determined volume of washing water in a container may be between 30 -180 liters, or 40-160 liters. Preferably between 50-100 liters, even more preferably, about 80 liters or about 90 liters. This may be advantageous as it may enable a compact and space efficient filtering apparatus which may be used effectively in environments with a specific water usage, thereby enabling an improved resource efficiency in the apparatus.

For example, the first container may have a first pre-determined volume of washing water of 180 liters, and the second container may have a second pre-determined volume of washing water of 60 liters. The third container may have a pre-determined volume of washing water of 60 liters. The fourth container may have a pre-determined volume of washing water of 60 liters. This may be advantageous as it enables the first container to store at least three multiples of 60 liters, thereby the apparatus may be enabled upon a first instance of use to store a maximum of 180 liters in the first container, and after transferring 60 liters to the second container, there may be washing water left in the first container to continue the filtering process. Thus, by further transferring of another 60 liters into the second container from the first container, and thereby accelerating the process of providing filtered water instead of having to wait for the first container to be refilled before continuing the filtering process. As there may be even further washing water left in the first container to enable another transfer of water from the first container to the second container, it thereby may enable a transfer of washing water from the second container to the third container. This is further advantageous as it enables a single apparatus to proceed from a single filling to store enough water to be filter through multiple containers. In another example, each pre-determined volume is the same volume, e.g., 80 liters, or 90 liters, which may enable the apparatus to have a more compact size and still enable a constant rate of transfer of water in batches of e.g. 80 or 90 liters from each container to the next as each previous container has the same capacity.

According to an embodiment, the first container may be a first settling tank, configured to separate contaminants and/or pollutants from the washing water using gravity. This may be beneficial as this may be a resource efficient manner of filtering various particles, contaminants, and pollutants from a contaminated liquid.

According to an embodiment, the apparatus may further comprise a water pump. The water pump may be arranged to pump washing water from the at least one outlet of the first container to the at least one inlet of the second container. This may be advantageous as this enables a control of the flow rate of the washing water from the first container to the second container, enabling a user to ensure that the flowrate through each overflow passage is set according to their requirements, thereby enabling a further fine control of the filtering of the washing water by the apparatus. The water pump may be configured to pump water from the first container to the second container through a conduit, a pipe or a hose.

Further, the first container may be located at a place relative to the second container not enabling water to flow from the first to the second container through an overflow passage. A first step of filtering the water may thereby be provided in the first container without requiring further space in the same plane as the second to the fourth containers. The first container may for instance be arranged below the second to fourth containers, and the water pump may be configured to pump water from the at least one outlet of the first container up to the inlet of the second container.

The second, third and fourth containers may be formed as divided compartments of a common container. The first container may be arranged below the common container. The first container may have a base area in corresponding size to a base area of the common container. This may provide a space efficient apparatus. The first container below the common container may for instance be arranged on a pallet, enabling easy handling in an industrial environment.

According to an embodiment, the second container may further comprise an oil filter, the oil filter may be configured to filter out at least one type of hydrocarbon pollutant from the washing water. It may be appreciated that an oil filter situated early in the filtering process, such as in the second container, may improve the quality of the filter washing water obtained in the filter unit. This may be advantageous as it may decrease the need to change the filter unit's filtering materials as frequently thereby providing a more time convenient apparatus for filtering washing water. An oil filter arranged prior to the filtering taking place in the third and fourth containers may improve the filtering in said containers.

According to an embodiment, the first container may comprise a partial divider arranged within the first container. The partial divider may be advantageous as it may separate, at least partially, the first container into two segments, thereby diminishing stirring and splashing from water entering into the container. This may be beneficial as it may reduce the amount of pollutants and sediments, which may remain from a previous filtering process, from being stirred up and mixed into any new washing water that is to be filtered, thereby enabling an improved resource usage of a filtering of washing water process. Herein, a partial divider may be a divider that has an opening at the bottom to enable washing water to proceed to the remainder of the container but to dampen the energy of the water as it flows into the container. The partial divider may be formed as a partial wall with a gap towards a bottom surface of the first container.

According to an embodiment, the filter unit may comprise at least two compartments. A first compartment may comprise a deionizing material, and a second compartment may comprise activated charcoal. This may be advantageous as it may enable both a heavy metal ion removal from the washing water enabling a reduction in the pollutants of heavy metal ions within the filtered washing water, as well as a reduction in the pH value, and/or a reduction in odorants from the filtered water thus enabling an improved taste and/or smell of the filtered washing water. The filter unit may further comprise oil absorbing material. The oil absorbing material may be arranged prior to the deionizing material.

According to an embodiment the flow rate is a configurable and/or pre-determined flow rate, generated by a water pump.

Further objects of, features of, and advantages with, the present invention will become apparent when studying the following detailed disclosure, the drawings, and the appended claims. Those skilled in the art will realize that different features of the present invention can be combined to create embodiments other than those described in the following.

### BRIEF DESCRIPTION OF THE DRAWINGS

This and other aspects of the present invention will now be described in more detail, with reference to the appended drawings showing embodiment(s) of the invention.
Figs. 1a-b schematically illustrate embodiments of the present invention of an apparatus for filtering washing water from a top side view.
Figs. 2a-b schematically illustrate an apparatus for filtering washing water according to embodiments of the present invention from a perspective view.
Fig. 3 schematically illustrates an apparatus for filtering washing water according to embodiments of the present invention from a perspective view.
Fig. 4 schematically illustrates an apparatus for filtering washing water according to embodiments of the present invention from a perspective view.
Fig. 5 schematically illustrates an apparatus for filtering washing water according to embodiments of the present invention from a top side view.
Fig. 6 schematically illustrates an apparatus for filtering washing water according to embodiments of the present invention from a perspective view.
Fig. 7 schematically illustrates an apparatus for filtering washing water according to embodiments of the present invention from a perspective view.
Fig. 8 schematically illustrates an apparatus for filtering washing water according to embodiments of the present invention from a perspective view.
Fig. 9 schematically illustrates an apparatus for filtering washing water according to embodiments of the present invention from a perspective view.
Fig. 10 illustrates a flow diagram of a method for filtering washing water according to embodiments of the present invention.

### DETAILED DESCRIPTION

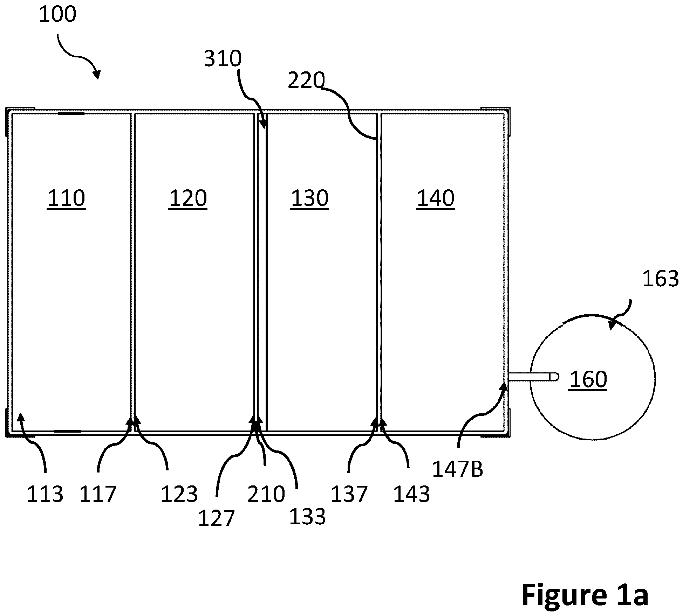

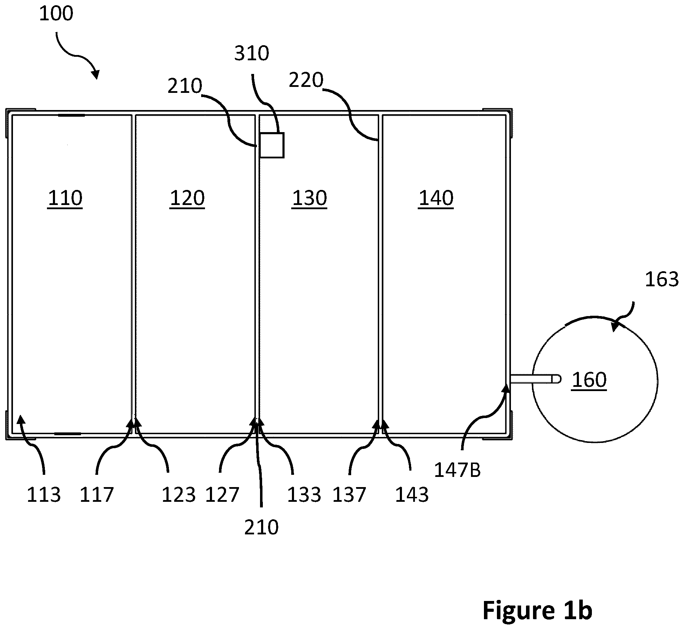

Fig. 1a and fig. 1b schematically shows a "top"- down view of an apparatus 100 for filtering washing water. The apparatus 100 for filtering washing water comprises a first container 110 for holding a first pre-determined volume of water, a second container 120 for holding a second pre-determined volume of water, a third container 130 for holding a third pre-determined volume of water, at least a fourth container 140 for holding a fourth pre-determined volume of water and a filter unit 160. It will be understood that the pre-determined volume of water for the first pre-determined volume, the second predetermined volume, the third pre-determined volume and/or the fourth pre-determined volume may be the same volume, e.g., 90 liters, or alternatively, it may be different volumes for some or all of the pre-determined volumes, for example, the first predetermined volume being 300 liters, the second pre-determined volume being 160 liters, the third pre-determined volume being, 50L, and the fourth pre-determined volume being 100 liters. Alternatively, e.g., the first pre-determined volume being 60L, the second pre-determined volume being 60L, the third pre-determined volume being 60 liters, and the fourth pre-determined volume being 240 liters.

The first container 110 comprising at least one inlet 113 and at least one outlet 117. The first container 110 arranged to receive water through the at least one inlet 113. Herein, the term "at least one inlet" may be one or more, e.g., 2 or 3, of a predetermined opening such as the top of a container that for example may be coverable by a lid, or alternatively, it may be an opening connected to a suitable material, e.g., a pipe, hose, or alternative conduit e.g., channel arranged to deposit water into the container through said opening. Herein, the term "at least one outlet" may be one or more of a predetermined opening, such as the top of a container, that may e.g., be coverable by a lid, or alternatively, it may be an opening connected to a suitable material, e.g., a pipe, a hose, or an alternative conduit, e.g., a channel or passage arranged to deposit water out of the container through said opening. It will be understood that in some arrangements the inlet and the outlet is the same opening,

The second container 120 comprising at least one inlet 123 and at least one outlet 127. The third container 130 comprising at least one inlet 133 and at least one outlet 137. The at least one fourth container 140 comprising at least one inlet 143 and at least one outlet 147. The filter unit 160 comprising at least one inlet 163.

The at least one outlet 117 of the first container 110 comprises an outlet arranged to deposit washing water through at least one inlet 123 of the second container 120. In other words, at least one outlet of the at least one outlet 117 of the first container 110 is arranged such that, when in use, it deposits washing water through the outlet of the at least one outlet 117 and into at least one inlet 123 of the second container 120 such that the second container 120 receives water from the first container 110. The second container 120 is arranged in fluid connection with a first overflow passage 210 arranged from the at least one outlet 127 of the second container 120 to the at least one inlet 133 of the third container 130. Thereby, fluidly connecting the second container 120 and the third container 130. The third container 130 is arranged in fluid connection with a second overflow passage 220 arranged from the at least one outlet 137 of the third container 130 to the at least one inlet 143 of the fourth container 140. Thereby, fluidly connecting the third container 130 and the fourth container 140.

The first overflow passage 210 is arranged at an upper portion of the second container 120, and the second overflow passage 220 is arranged at an upper portion of the third container 130.

The fourth container 140 further comprises outlet 147b of the at least one outlet 147 configured to deposit washing water into the filter unit 160. It is understood that the washing water is deposited into the filtering unit through the at least one inlet 163. The filter unit 160 comprises at least one of activated charcoal, and deionizing material. Herein, it will be appreciated that the activated charcoal may be of a particular mass, and / or granularity, e.g., granular activated charcoal (such as 12x40 or 8x30 sizes), or powdered activated charcoal e.g., between 0.15 and 2.00mm, or between, 0.4-1.7mm.

At least one of the first overflow passage 210, the second overflow passage 220, extends into a conduit element 310. The conduit element 310 leading from at least one of a respective container's inlet, e.g., (inlet 123, inlet 133, and inlet 143) and extending towards the bottom of the respective container. It will be understood that there is an opening, or a one way passage at the bottom of the conduit, such that washing water can enter into the respective container through the conduit 310.

Fig. 1a. further illustrates the conduit 310 coupled to the overflow passage 210 as a narrow chamber within the third container 130 providing water received through the third inlet 133 to be moved to the bottom of the third container. In an alternative example, fig 1b illustrates the conduit 310 coupled to the overflow passage 210 as a narrower conduit e.g., a fixture, (or pipe, or hose) arranged to be abutting and/or fixed to the inlet of the container. Thereby, providing water received through the third inlet 133 to be moved to the bottom of the third container.

In an example, the filter unit 160 further comprises at least one oil absorbing material, the oil absorbing material arranged to be above, ( or optionally below), either the deionizing material within the filter unit 160, and/or the activated charcoal within the filter unit 160. Thereby, there is provided an improved filter unit 160 enabling a less polluted and/or contaminated water to be derived from the apparatus 100.

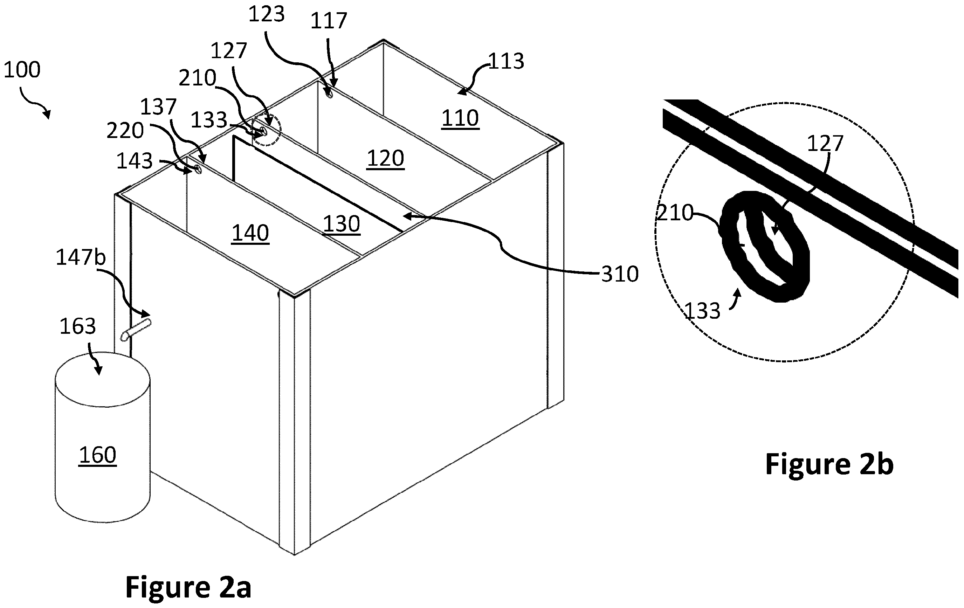

Fig. 2a schematically illustrate a perspective view of an embodiment of an apparatus 100 for filtering washing water illustrated in fig 1a. The opening between e.g. the first and the second containers 110, 120 thereby forms both the outlet 117 of the first container 110 and the inlet 123 of the second container 120, and the passage therebetween the first overflow passage 210. The opening between e.g. the second and the third containers 120, 130 thereby forms both the outlet 127 of the second container 120 and the inlet 133 of the third container 130, and the passage therebetween forms the second overflow passage 220. In the apparatus 100 illustrated in fig. 2a, a conduit 310 in the form of a narrow chamber is provided within the third container 130, providing water received through the third inlet 133 to be moved to the bottom of the third container 130.

Fig. 2b illustrates a detailed view of an example of an outlet 127 of a second container 120, an inlet 133 of a third container 130 and a first overflow passage 210 between the second container 120 and the third container 130. It will be appreciated that a similar and/or equivalent arrangement may be implemented between any of the containers, for example the fourth container 140, a fifth container 150 , and even a sixth or further container, wherein an overflow passage is used to fluidly connect neighboring containers. The opening between e.g. the first and the second containers 110, 120 thereby forms both the outlet 117 of the first container 110 and the inlet 123 of the second container 120, and the passage therebetween forms the first overflow passage 210. In the apparatus 100 illustrated in fig. 2a, a conduit 310 in the form of a narrow chamber is provided within the third container 130, providing water received through the third inlet 133 to be moved to the bottom of the third container 130.

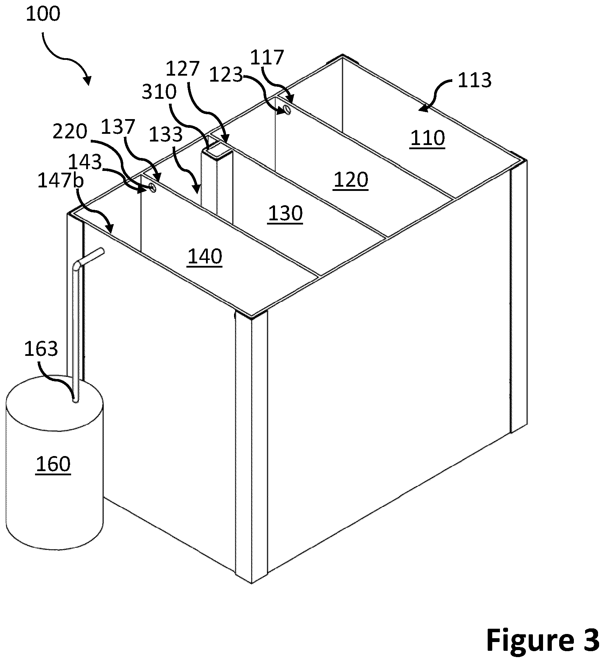

Fig. 3 schematically illustrates a perspective view of an embodiment of an apparatus 100 for filtering washing water illustrated in fig 1b.

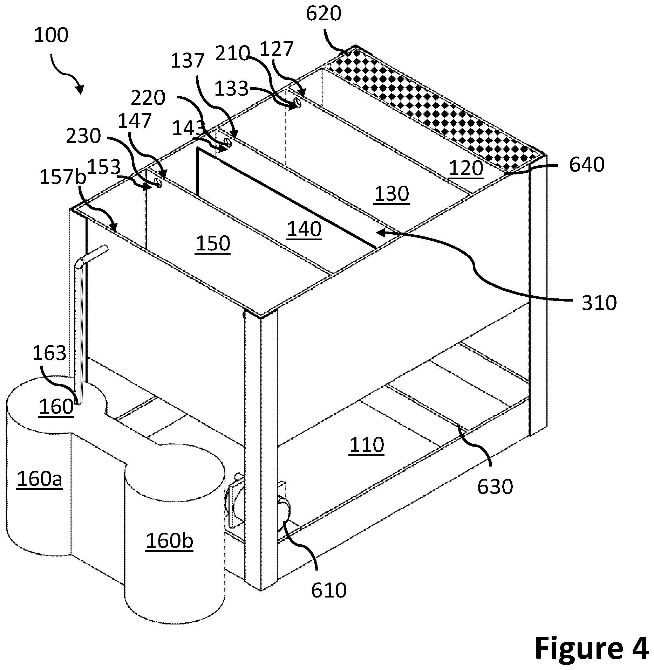

Fig. 4 illustrates a perspective view of embodiments of an apparatus 100 for filtering washing water. In an embodiment, the apparatus 100 for filtering washing water's fourth container 140 comprises at least a fifth container 150. The fourth container further comprising a third overflow passage 230 arranged from the at least one outlet 147 of the fourth container. The fourth container 140 arranged in fluid connect with the third overflow passaged 230. The fifth container 150 comprising at least one inlet 153 and at least one outlet 157, wherein the third overflow passage 230 is arranged from the at least one outlet 147 of the fourth container to the at least one inlet 153 of the fifth container 150. The third overflow passage 230 arranged at an upper portion of the fourth container. Thereby, fluidly connecting the fourth container 140 and the fifth container 150. The fifth container 150 comprising an outlet 157b configured to deposit water into the filter unit 160. Further illustrated in fig. 4 is an embodiment wherein the at least one outlet 157b configured to deposit water into the filter unit is arranged in the upper portion of the fifth container 150, however, in another example not shown the at least one outlet 157b configured to deposit water into the filter unit 160 is arranged in the lower portion of the fifth container 150.

A further embodiment is illustrated in fig. 4 wherein the apparatus 100 comprises a water pump 610, the water pump 610 is arranged, (or configured) to pump washing water from the at least one outlet 117 of the first container 110 to the at least one inlet 213 of the second container 210. It will be appreciated that a conduit, pipe or hose may be necessary from the outlet 117 of the first container 110 and the inlet 123 of the second container 120, however this is not illustrated in the image for the sake of clarity.

Further illustrated in fig. 4 is a further embodiment wherein the second container 120 comprise an oil filter 620. The oil filter 620 arranged to filter out at least one type of hydrocarbon pollutant from the washing water. Optionally, the oil filter 620 is arranged in a first portion of the first container, the first portion generated by a partial divider 640 arranged within the second container 120

Further illustrated in fig. 4 is an embodiment wherein the first container 110 comprises a partial divider 630 arranged within the first container 110. The partial divider 630 is arranged to have an opening in at the bottom of the partial divider 630 to enable water to continue to flow throughout the entirety of the first container 110 after entering into the first container through an inlet 113.

Also illustrated in fig. 4 is an embodiment wherein the filter unit 160 comprises at least two compartments, a first compartment 160a, comprising a deionizing material, and a second compartment 160b, comprising activated charcoal.

Further illustrated in fig. 4 is an embodiment wherein the first container 110 is, when in used, arranged beneath at least the second container 120, the third container 130, and the fourth container 140, and the second 120, third 130, and fourth 140 container are arranged to share at least one common side with at least one other container. It is further illustrated that the first container 110 is, when in use, further arranged beneath the fifth container 150. The fifth container 150 configured to share at least one common side with the fourth container 140.

The second through fifth containers 120, 130, 140, 150 may be formed in a common container, as illustrated in fig. 4. The containers 120, 130, 140, 150 in the common container may be formed as compartments separated by divider walls. The first container 110 may have a base area corresponding to a base area of the common container. The first container 110 below the common container comprising the second through fifth containers 120, 130, 140, 150 may be configured to fit on a pallet. The filter unit 150 may be configured to be arranged next to the first container 110 below the common container.

As previously indicated, in an embodiment the apparatus 100 is configured to comprise a fifth container 150, comprising at least one inlet 153 and at least one outlet 157, wherein the third overflow passage is arranged from the at least one outlet 147 of the fourth container to the at least one inlet 153 of the fifth container, and the fifth container comprising an outlet 157b configured to deposit water into the filter unit 160. It will be further appreciated that the apparatus 100 may in a further embodiment, have, for example, the fifth container 150, comprising a sixth container (not shown). The sixth container comprising at least one inlet and at least one outlet. The at least one outlet configured to deposit water into the filter unit, whereby the fifth container 150 comprises a fourth overflow passage arranged from the at least one outlet 157 of the fifth container to the at least one inlet of the sixth container, and wherein the fourth overflow passage is arranged in an upper portion of the fifth container 150. It will be further appreciated that more containers may be arranged in a similar manner and that may further be desired depending upon the filtering methods desired, e.g., if a time for filtering in each container is reduced. This feature is combinable with the embodiments illustrated in the previous figures fig. 1 - fig 3 on its own.

The apparatus 100 is configured to have the first container 110 arranged below the second container, 120, the third container 130 and the fourth container 140, and optionally, a fifth container 150. This feature is combinable with the embodiments illustrated in previous figures, fig. 1 - fig. 3, on its own or in combination with the fifth container 150 or further containers.

As previously illustrated, in fig 4. The apparatus 100 comprises a water pump 610. This feature is combinable with the embodiments illustrated in previous figures, fig 1 - fig 3, on its own or with a selection of the embodiments illustrated in fig 4.

The second container 120 comprises an oil filter 620. This feature is combinable with the embodiment illustrated in previous figures, fig 1 -fig 3, on its own.

The first container 110 comprises a divider 630. This feature is combinable with the embodiments illustrated in previous figures, fig. 1 - fig 3, on its own.

The filter unit 160 comprises a first compartment, 160a, and a second compartment 160b. it will be appreciated that in the figure it is illustrated that the first compartment 160a comprises the deionizing material, and the second compartment comprises activated charcoal.

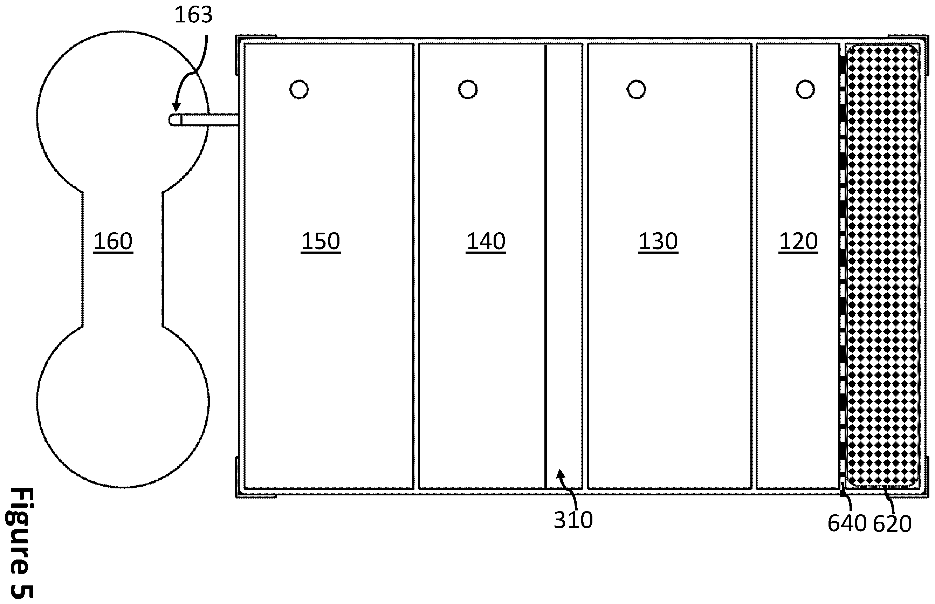

Fig. 5 schematically illustrates a top down view of the apparatus 100 illustrated in fig. 4. In an embodiment the oil filter 620 may be arranged to cover the first portion of the second container 120. The first portion may be formed by a partial divider 640 in that the divider has an opening at the bottom of the divider 640 enabling the water entering into the second container 120 to continue through to the outlet 127 of the second container. The inlet 123 is arranged to be above the oil filter 620 thereby enabling the washing water transported into the second container to pass through the oil filter 620. This may be advantageous as the implementation of an oil filter in the second container 120 may provide an efficient early filtering of oil particles in the washing water.

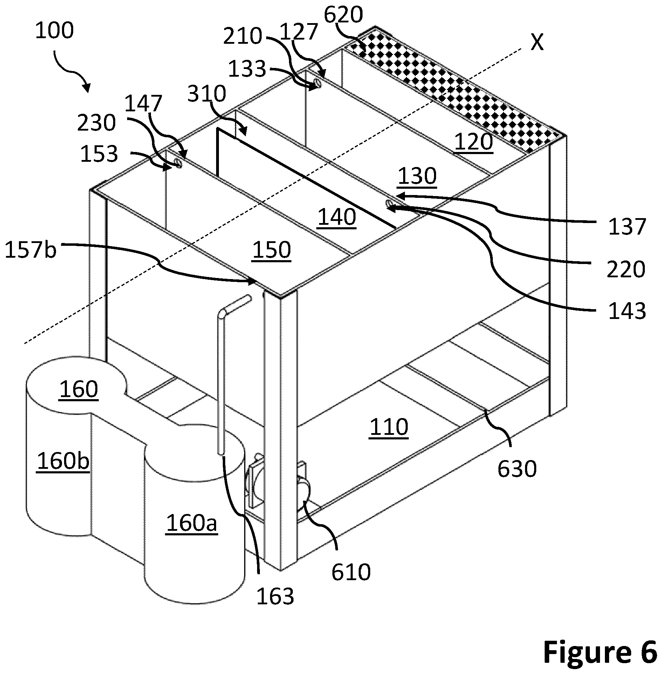

Fig. 6 schematically illustrates further embodiments of an apparatus 100 for filtering washing water. The at least one inlet 133 of the third container 130 and the at least one outlet 137 of the third container 130 are arranged diagonally across from each other within the same container (i.e., in this embodiment the third container 130). The third container 130 is divided across the middle by an axis x. The axis x may divide the third container 130 in two equally sized parts. The axis x may be a longitudinal axis of the apparatus 100. The at least one inlet 133 is arranged on a first side of the axis x, and the outlet 137 is arranged on the opposite side of the third container 130 of the at least one inlet 133, and on the other side of the axis x than the inlet 133.

Further illustrated is the at least one inlet 143 of the fourth container 140 and the at least one outlet 147 of the fourth container 140 arranged diagonally across from each other within the same container (i.e., the fourth container 140). The fourth container 140 is divided across the middle by the axis x. The axis x may divide the fourth container 140 in two equally sized parts. The axis x may be a longitudinal axis of the apparatus 100 wherein the at least one inlet 143 is arranged on a first side of the axis x, and the outlet 147 is arranged on the opposite side of the fourth container 140 of the at least one inlet 143, and on the other side of the axis x than the inlet 143.

Further illustrated in fig. 6 is the at least one inlet 153 of the fifth container 150 and the at least one outlet 157b of the fifth container 150 being arranged diagonally across from each other within the same container. The fifth container 150 divided across the middle by an axis x, wherein the at least one inlet 153 is arranged on a first side of the axis x, and the outlet 157b is arranged on the opposite side of the fifth container 150 of the at least one inlet 153, and on the other side of the axis x. The axis x may divide the fifth container 150 in two equally sized parts.

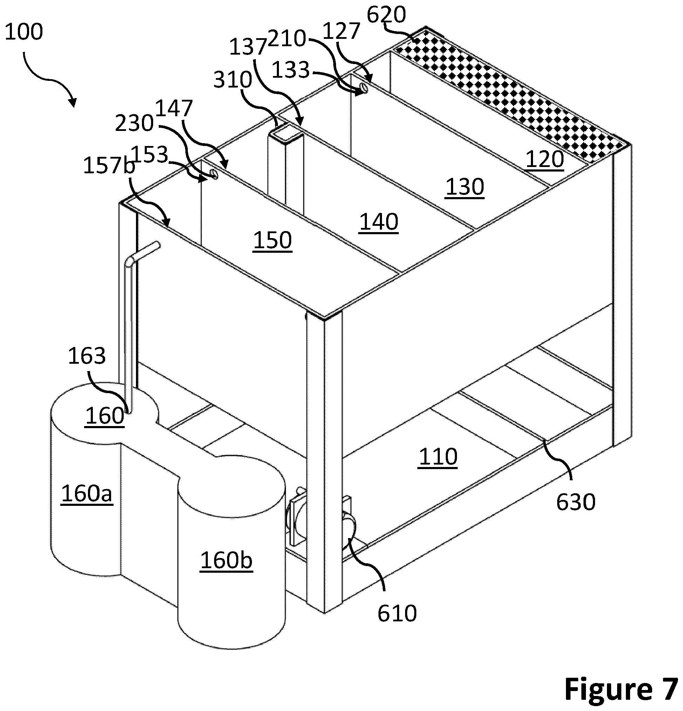

Fig. 7 schematically illustrates further embodiments of an apparatus 100 for filtering washing water. The embodiments illustrated the same as those in fig. 4 but with the conduit 310 indicated as the same type of conduit as in fig. 1b.

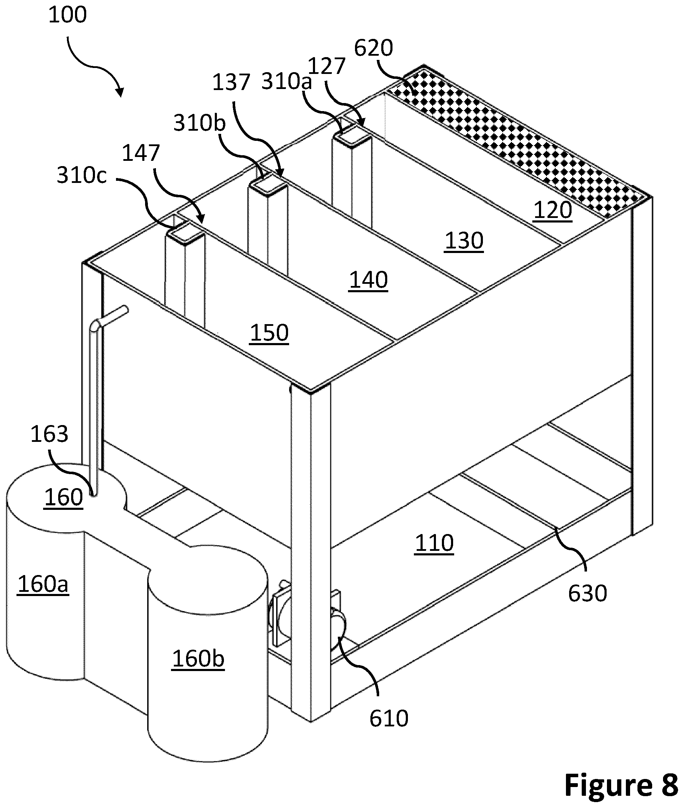

Fig. 8 schematically illustrates further embodiments of an apparatus 100 for filtering washing water. Herein, the apparatus 100 further comprises conduits 310a, 310b, and 310c for each of the inlets for the respective containers, the third container 130, the fourth container 140 and the fifth container 150.

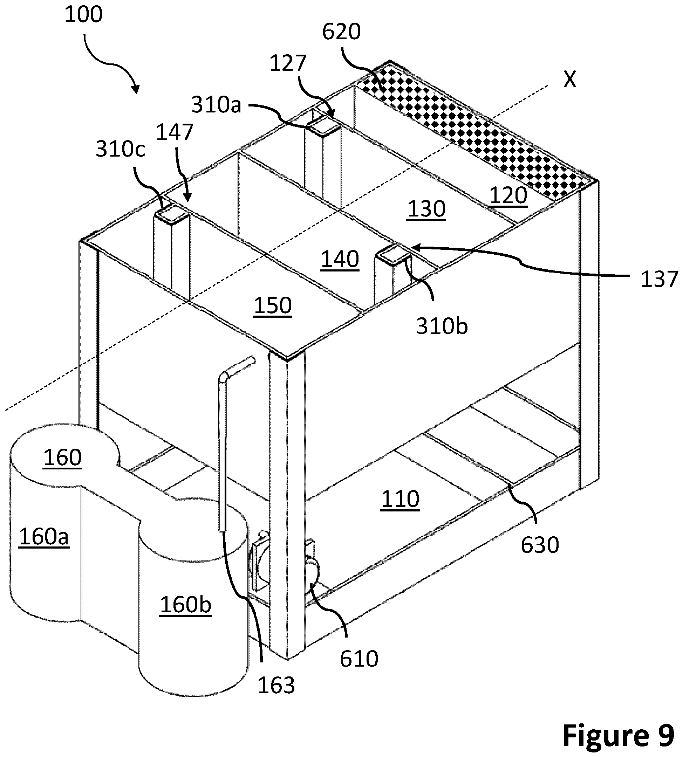

Fig. 9 schematically illustrates further embodiments of an apparatus 100 for filtering washing water. Herein, the apparatus 100 comprises the at least one inlet 133 of the third container 130 and the at least one outlet 137 of the third container 130 being arranged diagonally across from each other within the same container. The third container 130 divided across the middle by the axis x, wherein the at least one inlet 133 is arranged on a first side of the axis x, and the outlet 137 is arranged on the opposite side of the third container 130 of the at least one inlet 133, and on the other side of the axis x. Further illustrated is the at least one inlet 143 of the fourth container 140 and the at least one outlet 147 of the fourth container 140 arranged diagonally across from each other within the same container. The fourth container 140 divided across the middle by an axis x, wherein the at least one inlet 143 is arranged on a first side of the axis x, and the outlet 147 is arranged on the opposite side of the fourth container 140 of the at least one inlet 143, and on the other side of the axis x. Further illustrated in fig. 6 is the at least one inlet 153 of the fifth container 150 and the at least one outlet 157b of the fifth container 150 being arranged diagonally across from each other within the same container. The fifth container 150 divided across the middle by an axis x, wherein the at least one inlet 153 is arranged on a first side of the axis x, and the outlet 157b is arranged on the opposite side of the fifth container 150 of the at least one inlet 153, and on the other side of the axis x. Further illustrated is that the inlet 163 of the container 160 is in the second chamber 160b.

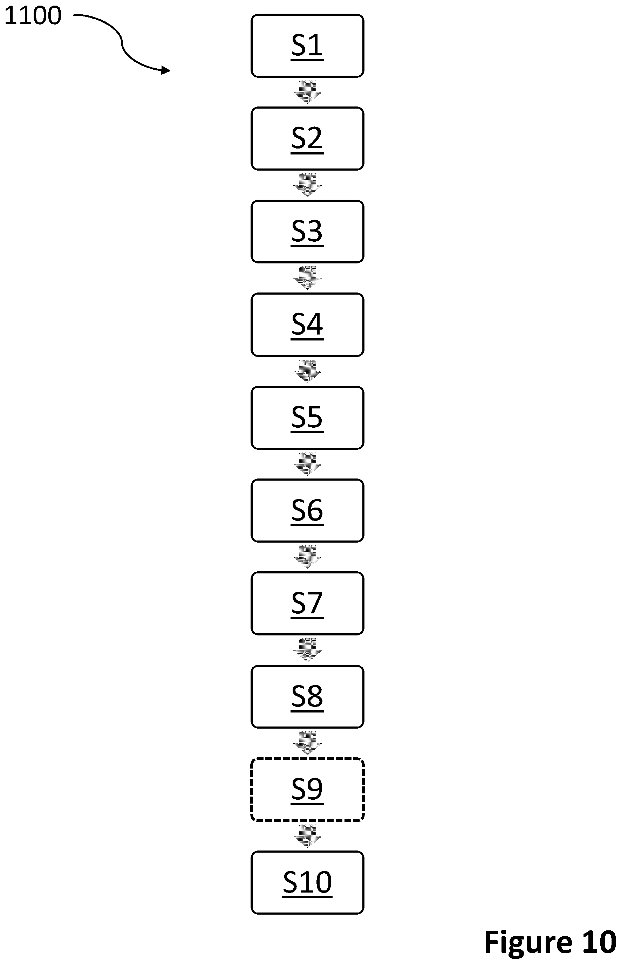

Fig 10 illustrates a block diagram of a method 1100 for filtering washing water utilizing an apparatus as described in figure 1. The method 1100 comprising at least the steps of receiving, S 1, washing water through a first inlet 113 of a first container 110, settling, S2, washing water in the first container 110 for at least a first pre-determined period of time, transporting S3, the washing water from at least an outlet 117 of the first container 110 to an inlet 213 of a second container 120 at a first flow rate, settling S4 the washing water in the second container 120 for at least a second pre-determined period of time, transporting S5 the washing water from at least one outlet 127 of the second container 120 to an inlet 133 of a third container 130 utilizing a first overflow passage 210 arranged in an upper portion of the second container 120, transporting S6 the washing water from an outlet 137 of the third container to an inlet 143 of a fourth container 140 using a second overflow passage 220 arranged in the upper portion of the third container 130, transporting S7 the washing water from the fourth container 140 through an outlet 147 of the fourth container 140, transporting S8 the washing water into an inlet 163 of a filter unit 160, and filtering S10 the washing water in the filter unit 160. The transporting S5 of the washing water to the inlet 133 of the third container 130 comprises transporting the top layer of washing water in the second container 120 thought the first overflow passage 210. The transporting S6 of the washing water to the inlet 143 of the fourth container 140 comprises transporting the top layer of washing water in the third container 130 through the second overflow passage 220. The filter unit 160 comprises at least one of activated charcoal and deionizing material, and wherein the filtering S10 of the washing water in the filter unit 160 utilizes the activated charcoal and / or the deionizing material.

It will be appreciated that the second pre-determined period of time can be same length as the first pre-determined period of time. For example, the first and second pre-determined period of time may be for example, an hour, three hours, six hours, twelve hours, between eighteen and twenty four hours, two days, five days, and a week.

The method 1100 may further comprise a step of discharging the filtered water from the filter unit 160.

In an optional embodiment, the method 1100 further comprises a step of transporting S9 the washing water from an outlet 147 of the fourth container 140 into an inlet 153 of a fifth container 150. This is advantageous as this enables the use of a fifth container 150 for a further filtering container for the filtering of washing water. The washing water may then be transported from the fifth container 150 to the filter unit 160.

In an optional embodiment, the flow rate is a configurable, pre-determined flow rate generated by a water pump. This is advantageous as this enables an improved control of the rate of flow of water from a container across the overflow. In other words, the flow rate assists in minimizing the top layer of water to be transported across any one overflow passage, thereby enabling an improved control in the amount of water transported between containers, and ergo an improvement in the control of the amount of pollutants and contaminants flowing from each container to the next. For example, particularly polluted water may require a lower flow rate to ensure that the water quality at the end is at the desired quality, thereby extending the time, but improving the quality, vice versa less polluted water may not require as slow flow, and thereby enabling an improvement in the time and resources used for providing filtered water at the desired quality.

The person skilled in the art realizes that the present invention by no means is limited to the preferred embodiments described above. On the contrary, many modifications and variations are possible within the scope of the appended claims.

## Claims

1. An apparatus (100) for filtering washing water, comprising:
a first container (110) for holding a first pre-determined volume of water;
the first container comprising:
at least one inlet (113); and
at least one outlet (117);
the first container arranged to receive water through the at least one inlet;
a second container (120) for holding a second pre-determined volume of water;
the second container comprising:
at least one inlet (123); and
at least one outlet (127);
a third container (130) for holding a third pre-determined volume of water;
the third container comprising:
at least one inlet (133); and
at least one outlet (137);
at least one fourth container (140) for holding a fourth pre-determined volume of water;
the fourth container comprising:
at least one inlet (143); and
at least one outlet (147);
a filter unit (160) comprising:
at least one inlet (163);
wherein the at least one outlet (117) of the first container comprises an outlet arranged to deposit washing water through at least one inlet (123) of the second container into the second container;
wherein the second container comprises a first overflow passage (210) arranged from the at least one outlet (127) of the second container to the at least one inlet (133) of the third container, fluidly connecting the second container and the third container;
wherein the first overflow passage is arranged in an upper portion of the second container;
wherein the third container comprises a second overflow passage (220) arranged from the at least one outlet (137) of the third container to the at least one inlet (143) of the fourth container, fluidly connecting the third container and the fourth container;
wherein the second overflow passage is arranged in an upper portion of the third container;
wherein the fourth container comprises any one or more of:
a third overflow passage (230) arranged from the at least one outlet (147) of the fourth container, the third overflow passage arranged in an upper portion of the fourth container; and
an outlet (147b) configured to deposit washing water into the filter unit;
wherein the filter unit comprises at least one of:
activated charcoal; and
deionizing material;
wherein at least one of the first, second, and/or third overflow passage extends into a conduit element (310), the conduit element leading from a respective container's inlet and extending towards the bottom of the respective container.

2. The apparatus according to claim 1 wherein the fourth container comprises at least a fifth container (150); the fifth container comprising:
at least one inlet (153); and
at least one outlet (157),
wherein the third overflow passage is arranged from the at least one outlet (147) of the fourth container to the at least one inlet (153) of the fifth container; and the fifth container comprises any one or more of the following:
a fourth overflow passage arranged from the at least one outlet of the fifth container, wherein the fourth overflow passage is arranged in an upper portion of the fifth container; and
an outlet (157b) configured to deposit water into the filter unit.

3. The apparatus according to claim 1 or 2, wherein any outlet configured to deposit water into the filter unit is arranged in the upper portion of the respective container.

4. The apparatus according to any one of claims 1-3, wherein for at least one of the second through fourth container (120, 130, 140, 150) an axis (X) extends through said container (120, 130, 140, 150), wherein the at least one inlet (123, 133, 143, 153) of the container (120, 130, 140, 150) is arranged on a first side of the axis (X), and the at least one outlet (127, 137, 147, 157) of the container is arranged on an opposite side of the axis (X) in the container (120, 130, 140, 150).

5. The apparatus according to any one of claims 1 -4, wherein each overflow passages extends into a respective conduit element (310), the respective conduit element leading from a respective container's inlet and extending towards the bottom of the respective container.

6. The apparatus according to any one of claims 1-5, wherein the first through fourth pre-determined volume of washing water is between 30-180 liters, or 40-160 liters, preferably between 50-100 liters, more preferably, 80 liters, or 90 liters.

7. The apparatus according to any one of claims 1-6, wherein the first container (110) is a first settling tank, configured to separate contaminants and/or pollutants from the washing water utilizing gravity.

8. The apparatus according to any one of claims 1-7, further comprising a water pump (610), the water pump arranged to pump washing water from the at least one outlet (117) of the first container to the at least one inlet (213) of the second container.

9. The apparatus according to any one of claims 1-8, wherein the second container (120) further comprises an oil filter (620), the oil filter arranged to filter out at least one type of hydrocarbon pollutant from the washing water.

10. The apparatus according to any one of claims 1-9, wherein the first container (110) comprises a partial divider (630) arranged within the first container, and/or wherein the second container (120) comprises a partial divider (640) arranged within the second container.

11. The apparatus according to any one of claims 1-10, wherein the filter unit comprises at least two compartments;
a first compartment (160a) comprising a deionizing material activated charcoal, and:
a second compartment (160b) comprising an activated charcoal.

12. The apparatus according to any one of claims 1-11, wherein the first container (110) is arranged beneath at least the second, third and fourth containers (120, 130, 140); and the second, third and fourth containers each is arranged to share at least one common side with at least one other container.

13. A method (1100) for filtering washing water, utilizing an apparatus (100) according to any one of claims 1-12, wherein the method comprises:
receiving (S 1) washing water through a first inlet of a first container;
settling (S2) washing water in the first container for at least a first pre-determined period of time;
transporting (S3) the washing water from an outlet of first container to an inlet of a second container at a first flow rate;
settling (S4) the washing water in the second container for at least a second pre-determined period of time,
transporting (S5) the washing water from an outlet of the second container to an inlet of a third container utilizing a first overflow passage arranged in an upper portion of the second container, wherein the transporting of the washing water to the third container comprises transporting the top layer of washing water in the second container through the first overflow passage;
transporting (S6) the washing water from an outlet of the third container to an inlet of a fourth container utilizing a second overflow passage arranged in the upper portion of the third container, wherein the transporting of the washing water to the fourth container comprises transporting the top layer of washing water in the third container through the second overflow passage;
transporting (S7) the washing water from the fourth container through an outlet of the fourth container;
transporting (S8) the washing water into an inlet of a filter unit comprising at least one of:
activated charcoal, and
deionizing material; and
filtering (S10) the washing water in the filter unit utilizing the activated charcoal and/or the deionizing material.

14. The method of claim 13, wherein the flow rate is a configurable, and/or pre-determined, flow rate generated by a water pump.

15. The method of claim 13 or 14, wherein each of the pre-determined periods of time is at least 30 minutes, at least one hour, or at least two hours.
